# EUROPÄISCHE PATENTANMELDUNG

(11) **EP 3 842 278 A1**
(43) Veröffentlichungstag der Anmeldung: **30.06.2021**
(21) Anmeldenummer: 20215867.1
(22) Anmeldetag: 21.12.2020
(51) Int. Cl.: B60L 53/00, H02J 3/26

(54) **LADEINFRASTRUKTURANORDNUNG ZUM LADEN VON ELEKTROFAHRZEUGEN UND BETRIEBSVERFAHREN HIERFÜR**

(30) Priorität: 23.12.2019 DE 102019135655
(71) Anmelder: Compleo Charging Solutions AG, 44309 Dortmund (DE)
(72) Erfinder: Kachouh, Checrallah, 44227 Dortmund (DE); Turki, Faical, 59174 Kamen (DE)
(74) Vertreter: Wickord, Wiro

(57) **Zusammenfassung**

Die Erfindung betrifft eine Ladeinfrastrukturanordnung zum Laden von Elektrofahrzeugen umfassend einen Anschlusspunkt (6), der eingerichtet ist zum Anschluss der Ladeinfrastrukturanordnung an ein externes Versorgungsnetz (8), umfassend ein zu dem Anschlusspunkt geführtes Drehstrom-Zuleitungssystem (7) mit drei Phasenleitern und einem Nullleiter, umfassend wenigstens einen AC-Ladepunkt (1-4), der an wenigstens einen Phasenleiter des Drehstrom-Zuleitungssystems (7) und den Nullleiter angeschlossen ist, und umfassend eine DC-Ladeeinrichtung (5) mit einem AC/DC-Wandler, der über Anschlussleiter an die Phasenleiter und den Nullleiter des Drehstrom-Zuleitungssystems (7) angeschlossen ist, wobei für den Anschlusspunkt (6) eine maximale Stromtragfähigkeit und/oder eine maximale Schieflast vorgegeben sind und wobei die DC-Ladeeinrichtung (5) eingerichtet ist zum Entgegennehmen einer Information über eine kumulierte Belastung jedes Phasenleiters des Drehstrom-Zuleitungssystems (7) durch die Wechselstromlasteinheiten und/oder eine lokale Belastung des Drehstrom-Zuleitungssystems (7) durch jede einzelne Wechselstromlasteinheit, zum Bereitstellen eines Ladestroms an einem Ladepunkt der DC-Ladeeinrichtung (5) für ein an die Ladepunkt angeschlossenes Elektrofahrzeug und zum Einprägen eines Ausgleichsstroms zwischen den Phasenleitern und dem Nullleiter des Drehstrom-Zuleitungssystems (7) derart, dass in dem Anschlusspunkt die maximale Schieflast und/oder die maximale Stromtragfähigkeit nicht überschritten sind. Ferner betrifft die Erfindung eine Schieflastausgleichseinheit für eine Ladeinfrastrukturanordnung sowie ein Betriebsverfahren hierfür.

## Beschreibung

Die Erfindung betrifft eine Ladeinfrastrukturanordnung zum Laden von Elektrofahrzeugen mit einer DC-Ladeeinrichtung und mit wenigstens einer Wechselstromlasteinheit, welche über ein Drehstrom-Zuleitungssystem mit drei Phasenleitern und einem Nullleiter an einen Anschlusspunkt angeschlossen ist, der eingerichtet ist zum Anschluss der Ladeinfrastrukturanordnung an ein externes Versorgungsnetz. Beispielsweise kann ein AC-Ladeeinrichtung als Wechselstromlasteinheit vorgesehen sein. Ferner betrifft die Erfindung ein Betriebsverfahren für eine Ladeinfrastrukturanordnung zum Laden von Elektrofahrzeugen.

Zum Laden von Elektrofahrzeugen werden in der Praxis vergleichsweise hohe Ladeströme bereitgestellt. Die hohen Ladeströme beziehungsweise die damit verbundenen Leistungen können ein Versorgungsnetz erheblich belasten. Dies gilt insbesondere, wenn eine Mehrzahl von Ladepunkten in einem Anschlusspunkt gemeinsam an das Versorgungsnetz angeschlossen ist und die Ladepunkte zugleich zum Laden von Elektrofahrzeugen genutzt wird.

Viele Netzbetreiber spezifizieren zur Vermeidung einer zu hohen Belastung des Versorgungsnetzes Grenzwerte für die Versorgungsnetzbelastung. Dies erfolgt beispielsweise in Bezug auf die maximale Stromtragfähigkeit, das heißt den zum Betrieb der Ladeinfrastrukturanordnung dem Versorgungsnetz maximal entnommenen Strom, sowie eine Schieflast. Die Schieflast versteht sich dabei als die durch vektorielle Addition gebildete Summe aller Belastungen der Phasenleiter im Anschlusspunkt bezogen auf die Ströme beziehungsweise die Leistungen. Beispielsweise ist die Schieflast null, wenn die Belastung symmetrisch ist und die Strom- beziehungsweise Leistungsamplitude für alle Phasen gleich groß ist.

Um die Vorgaben in Bezug auf die maximale Stromtragfähigkeit sowie die maximale Schieflast auch bei ungünstigen Lastzuständen einhalten zu können, werden verschiedene AC-Ladeeinrichtungen innerhalb einer Ladeinfrastrukturanordnung üblicherweise an unterschiedliche Phasenleiter des Drehstrom-Zuleitungssystems angeschlossen. Hierdurch kann erreicht werden, dass die Last beim Laden der Fahrzeuge möglichst auf verschiedene Phasenleiter verteilt wird und nicht ein Phasenleiter über Gebühr belastet ist. Dieses Vorgehen ist analog anwendbar und übertragbar auf andere Wechselstromlasteinheiten wie beispielsweise an das Drehstrom-Zuleitungssystem angeschlossene Produktionsmittel beziehungsweise Fertigungsmaschinen. Weiter können je nach aktueller Lastsituation einzelne AC-Ladeeinrichtungen abgeschaltet werden, wenn der ihnen zugeordnete Phasenleiter zu hoch belastet ist.

Ebenfalls ist bekannt, dass zur Einhaltung der Vorgaben in Bezug auf die maximale Stromtragfähigkeit einzelne Fahrzeuge mit einem geringeren als den technisch möglichen Ladestrom geladen werden. Beispielsweise kann der Ladestrom für die zuletzt hinzugekommenen Elektrofahrzeuge reduziert werden, um den Grenzwert in Bezug auf die Stromtragfähigkeit einzuhalten, oder es ist vorgesehen, dass der Ladestrom für mehrere oder alle Fahrzeuge anteilig reduziert wird. Ferner kann ungeachtet der Grenzwerte für die maximale Stromtragfähigkeit der Ladestrom für einzelne oder alle Elektrofahrzeuge reduziert werden, wenn sich beispielsweise durch das Beenden eines Ladevorgangs die Belastung in einem Phasenleiter reduziert und dadurch die Schieflast im Anschlusspunkt der Ladeinfrastrukturanordnung unzulässig ansteigt.

Aufgabe der vorliegenden Erfindung ist es, eine verbesserte Ladeinfrastrukturanordnung sowie ein Betriebsverfahren hierfür anzugeben, welche den vorbezeichneten Problemen entgegenwirken.

Zur Lösung der Aufgabe weist die Erfindung die Merkmale des Patentanspruchs 1 auf. Demzufolge umfasst die Ladeinfrastrukturanordnung zum Laden von Elektrofahrzeugen einen Anschlusspunkt, der eingerichtet ist zum Anschluss der Ladeinfrastrukturanordnung an ein externes Versorgungsnetz, ein zu dem Anschlusspunkt geführtes Drehstrom-Zuleitungssystem mit drei Phasenleitern und einem Nullleiter, wenigstens eine Wechselstromlasteinheit, die an wenigstens oder genau einem Phasenleiter des Drehstrom-Zuleitungssystems und dem Nullleiter angeschlossen ist, sowie eine DC-Ladeeinrichtung mit einem AC/DC-Wandler, der über Anschlussleiter an das Drehstrom-Zuleitungssystem angeschlossen ist. Dabei sind für den Anschlusspunkt eine maximale Stromtragfähigkeit und/oder eine maximale Schieflast vorgegeben. Die DC-Ladeeinrichtung ist eingerichtet zum Entgegennehmen einer Information über eine kumulierte Belastung jedes Phasenleiters des Drehstrom-Zuleitungssystems, die durch die Summe der Wechselstromlasteinheiten hervorgerufen ist, und/oder einer Information über eine lokale Belastung des Drehstrom-Zuleitungssystems durch jede einzelne Wechselstromlasteinheit, zum Bereitstellen eines Ladestroms an einem Ladepunkt der DC-Ladeeinrichtung und zum Einprägen eines Ausgleichsstroms zwischen den Phasenleitern des Drehstrom-Zuleitungssystems derart, dass in dem Anschlusspunkt die Grenzwerte für die maximale Schieflast und/oder die maximale Stromtragfähigkeit nicht überschritten sind.

Die lokale und/oder kumulierte Belastung des Drehstrom-Zuleitungssystems durch die Wechselstromlasteinheiten kann beispielsweise ermittelt werden über den Laststrom, welcher den Wirkstrom und den Blindstrom umfasst. Beispielsweise kann die lokale und/oder kumulierte Belastung über die Scheinleistung bestimmt werden. Die Scheinleistung umfasst die Wirkleistung und die Blindleistung.

Der besondere Vorteil der Erfindung besteht darin, dass der DC-Ladeeinrichtung innerhalb der Ladeinfrastrukturanordnung eine doppelte Aufgabe zukommt: Sie dient zum einen dazu, an einem Ladepunkt einen Ladestrom für ein an die DC-Ladeeinrichtung angeschlossenes Elektrofahrzeug bereitzustellen, und zum anderen der Symmetrierung der Lastströme im Drehstrom-Zuleitungssystem der Ladeinfrastrukturanordnung. Hierzu wird jeweils eine den AC/DC-Wandler umfassenden Leistungselektronik der DC-Ladeeinrichtung verwendet. Die Ladeinfrastrukturanordnung kann insofern sehr kostengünstig realisiert werden. Durch den Ausgleich der Schieflast innerhalb der Ladeinfrastrukturanordnung kann die Belastung der Phasenleiter des Drehstrom-Zuleitungssystems ausgeglichen werden mit der Folge, dass Spitzenlasten vermieden beziehungsweise so verteilt werden können, dass eine tatsächliche Schieflast im Anschlusspunkt der Ladeinfrastrukturanordnung geringer ist als die gerade noch zulässige maximale Schieflast, die exemplarisch für verschiedene Netzbetreiber in Deutschland 20 A beziehungsweise 4,6 kVA beträgt. Hierzu wird den am wenigsten belasteten Phasen beziehungsweise Phasenleitern des Drehstrom-Zuleitungssystems Energie entnommen, um diese auf die höher belasteten Phasen beziehungsweise Phasenleiter zu verteilen. Im optimalen symmetrischen Fall sind alle Phasenleiter gleich belastet, das heißt die Lastströme in allen Phasenleitern sind gleich.

Nach einer bevorzugten Ausführungsform der Erfindung sieht die DC-Ladeeinrichtung eine Steuerung und die Leistungselektronik eine Brückenschaltung vor, die bevorzugt zugleich als AC/DC-Wandler dient. Die Brückenschaltung umfasst einen Brückenzweig je Phasenleiter beziehungsweise je Anschlussleiter, der einem Phasenleiter des Drehstrom-Zuleitungssystems zugeordnet ist, sowie einen Zwischenkreis mit einer Zwischenkreiskapazität, die eine Mehrzahl von Kondensatoren umfassen kann.

Eine sehr kostengünstige Realisierung der Brückenschaltung ergibt sich, wenn der Nullleiter beziehungsweise ein dem Nullleiter des Drehstrom-Zuleitungssystems zugeordneter Anschlussleiter der DC-Ladeeinrichtung an einen Mittelpunkt der Zwischenkreiskapazität angeschlossen ist.

Nach einer alternativen Ausführungsform der Erfindung kann die Brückenschaltung einen weiteren Brückenzweig für den dem Nullleiter des Drehstrom-Zuleitungssystems zugeordneten Anschlussleiter vorsehen. Der Nullleiter wird dabei getaktet betrieben, damit der Strom darin geregelt werden kann. Vorteilhaft ist die Belastung für den Zwischenkreiskapazität hierbei gering, da er nur die Kommutierungsenergie liefern muss.

Nach einer Weiterbildung der Erfindung umfasst die DC-Ladeeinrichtung einen galvanisch getrennten DC/DC-Wandler, der zwischen dem AC/DC-Wandler der Leistungselektronik einerseits um dem Ladepunkt der DC-Ladeeinrichtung angeordnet ist.

Nach einer Weiterbildung der Erfindung sieht die Ladeinfrastrukturanordnung Messmittel vor zum Bestimmen der kumulierten Belastung (Lastströme und/oder Scheinleistung) in den verschiedenen Phasenleiter des Drehstrom-Zuleitungssystems. Bevorzugt sind die Messmittel zwischen der wenigstens einen Wechselstromlasteinheit oder der Mehrzahl von Wechselstromlasteinheiten einerseits und der DC-Ladeeinrichtung andererseits angeordnet. Vorteilhaft kann durch das Vorsehen der Messmittel die Belastung der Phasenleiter ermittelt und im Rahmen der Symmetrierung der Belastung im Drehstrom-Zuleitungssystem zum geregelten beziehungsweise gesteuerten Betrieb der DC-Ladeeinrichtung verwendet werden. Insbesondere kann vorgesehen sein, dass die Lastströme in jedem Phasenleiter durch ein einzelnes Messmittel individuell bestimmt werden.

Nach einer Weiterbildung der Erfindung ist von jeder Wechselstromlasteinheit in der Ladeinfrastrukturanordnung eine Information zu der dortigen lokalen Belastung an die DC-Ladeeinrichtung übertragbar. Vorteilhaft kann durch die Übertragung der Information zu den Lastströmen optional auf das Vorsehen der Messmittel im Drehstrom-Zuleitungssystem verzichtet werden. Aus der Information über die verschiedenen lokalen Belastungen und dem Wissen über die Phasenleiter des Drehstrom-Zuleitungssystems, an die die Wechselstromlasteinheiten angeschlossen sind, wird dann die (Schief-) Last im Drehstrom-Zuleitungssystem vor der Symmetrierung bestimmt.

Nach einer Weiterbildung der Erfindung kann die Information über die lokalen Belastungen der Wechselstromlasteinheiten und/oder die kumulierte Belastung im Drehstrom-Zuleitungssystem kabellos und/oder leitungsgebunden an die Schieflastausgleichseinheit bereitgestellt werden. Die DC-Ladeeinrichtung kann geregelt oder gesteuert betrieben werden.

Beispielsweise können AC-Ladeeinrichtungen als Wechselstromlasteinheiten an das Drehstrom-Zuleitungssystem der Ladeinfrastrukturanordnung angeschlossen sein. Beispielsweise können Produktionsmittel eines Fertigungsbetriebs als weitere Wechselstromlasteinheiten an das Drehstrom-Zuleitungssystem angeschlossen sein. Die DC-Ladeeinrichtung der erfindungsgemäßen Ladeinfrastrukturanordnung dient dann dazu, eine eventuelle Schieflast, welche auf die verschiedenen Wechselstromlasteinheiten zurückgeht, so auszugleichen, dass die maximale Schieflast im Anschlusspunkt nicht überschritten und die Stromtragfähigkeit gewährleistet ist. Sofern beispielsweise aufgrund von Leistungsgrenzen der Leistungselektronik der DC-Ladeeinrichtung die Schieflast nicht ausgeglichen werden kann oder der Grenzwert für die Stromtragfähigkeit nicht eingehalten werden kann, können einzelne oder alle Wechselstromlasteinheiten und/oder die DC-Lasteinrichtung selbst gedrosselt weiterbetrieben oder abgeschaltet werden. Die DC-Lasteinrichtung kann im gedrosselten Betrieb insbesondere einen geringeren als den maximal möglichen Ladestrom bereitstellen.

Zur Lösung der Aufgabe weist die Erfindung die Merkmale des Patentanspruchs 11 auf. Demzufolge umfasst ein Betriebsverfahren für eine Ladeinfrastrukturanordnung zum Laden von Elektrofahrzeugen die folgenden Schritte: Die Schieflastausgleichseinheit nimmt eine Information über eine kumulierte Belastung jedes Phasenleiter des Drehstrom-Zuleitungssystems durch die Summe der Wechselstromlasteinheiten und/oder eine lokale Belastung des Drehstrom-Zuleitungssystems durch jede einzelne Wechselstromlasteinheit entgegen, bestimmt hieraus eine resultierende Schieflast im Drehstrom-Zuleitungssystem und prägt dann zwischen den Phasenleitern eines Drehstrom-Zuleitungssystems der Ladeinfrastrukturanordnung einen Ausgleichsstrom ein, der so bemessen ist, dass eine tatsächliche Schieflast zwischen den Phasenleitern im Anschlusspunkt der Ladeinfrastrukturanordnung kleiner ist als eine für den Anschlusspunkt definierte maximale Schieflast und/oder dass eine maximale Stromtragfähigkeit gewahrt ist.

Nach einer bevorzugten Ausführungsform der Erfindung gleicht die DC-Ladeeinrichtung die Schieflast im Drehstrom-Zuleitungssystem aus und stellt zugleich einen Ladestrom für ein Elektrofahrzeug bereit, das an einen Ladepunkt der DC-Ladeeinrichtung angeschlossen ist.

Nach einer bevorzugten Weiterbildung der Erfindung ist vorgesehen, dass die tatsächliche Schieflast im Anschlusspunkt im Wesentlichen vollständig ausgeglichen wird und zu Null wird.

Der besondere Vorteil der Erfindung besteht darin, dass durch das erfindungsgemäße Betriebsverfahren die Phasen des Drehstrom-Zuleitungssystems gleichmäßiger belastet werden und im Ergebnis eine Reduzierung der Schieflast erreicht wird beziehungsweise ein Grenzwert für die maximale Stromtragfähigkeit eingehalten wird. Eine Vielzahl von Fahrzeugen, die an die Ladeinfrastrukturanordnung angeschlossen sind, können dann schneller und/oder mit hohen Ladeströmen geladen werden, ohne dass ein externes Versorgungsnetz unzulässig hoch belastet wird.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Ladeinfrastrukturanordnung gelten selbstverständlich auch im Zusammenhang mit dem erfindungsgemäßen Betriebsverfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

### Es zeigen:

- Fig. 1: eine Prinzipdarstellung einer erfindungsgemäßen Ladeinfrastrukturanordnung mit vier an ein Drehstrom-Zuleitungssystem angeschlossenen AC-Ladeeinrichtung als Wechselstromlasteinheiten und einer DC-Ladeeinrichtung,
- Fig. 2: eine Prinzipdarstellung der Doppelfunktion "Ausgleichen" und "Laden" der DC-Ladeeinrichtung,
- Fig. 3: ein Blockschaltbild zum Aufbau der DC-Ladeeinrichtung,
- Fig. 4: eine grafische Darstellung von Lastströmen im Drehstrom-Zuleitungssystem vor einer Symmetrierung,
- Fig. 5: die Lastströme im Drehstrom-Zuleitungssystem nach der Symmetrierung,
- Fig. 6: eine grafische Darstellung von Ausgleichsströmen, welche von der DC-Ladeeinrichtung eingeprägt werden,
- Fig. 7: eine grafische Darstellung von eingespeisten Leistungen der DC-Ladeeinrichtung,
- Fig. 8: eine erste Variante einer Brückenschaltung der Leistungselektronik der DC-Ladeeinrichtung,
- Fig. 9: eine zweite Variante der Brückenschaltung der Leistungselektronik der DC-Ladeeinrichtung und
- Fig. 10: eine dritte Variante der Brückenschaltung der Leistungselektronik der DC-Ladeeinrichtung.

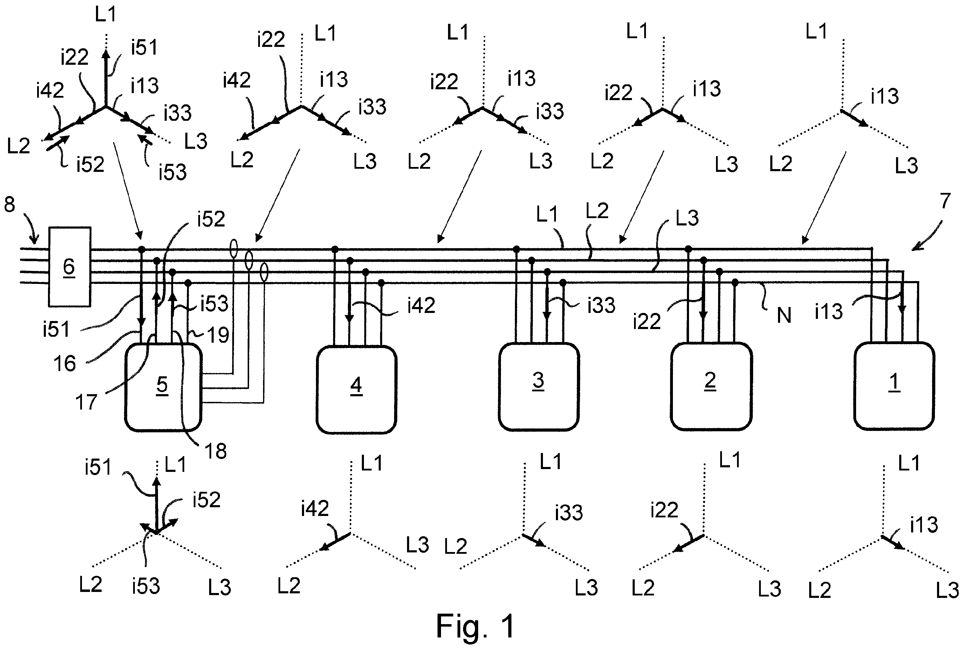

Eine erfindungsgemäße Ladeinfrastrukturanordnung nach Fig. 1 umfasst exemplarisch vier AC-Ladeeinrichtungen, die als Wechselstromlasteinheiten 1, 2, 3, 4 an ein Drehstrom-Zuleitungssystem 7 der Ladeinfrastrukturanordnung angeschlossen sind. Das Drehstrom-Zuleitungssystem 7 ist zu einem Anschlusspunkt 6 geführt. Der Anschlusspunkt 6 dient dem Anschluss der Ladeinfrastrukturanordnung an ein externes Versorgungsnetz 8. Das Drehstrom-Zuleitungssystem 7 sieht jedenfalls einen ersten Phasenleiter L1, einen zweiten Phasenleiter L2, einen dritten Phasenleiter L3 sowie einen Nullleiter N vor.

Die Ladeinfrastrukturanordnung umfasst darüber hinaus eine DC-Ladeeinrichtung 5, welche über vier Anschlussleiter 16, 17, 18, 19 an die Phasenleiter L1, L2, L3 und dem Nullleiter N des Drehstrom-Zuleitungssystems 7 angeschlossen ist. Die DC-Ladeeinrichtung 5 umfasst eine Steuerung sowie eine Leistungselektronik 22 mit einem AC/DC-Wandler 24. Der AC/DC-Wandler 24 ist als eine Brückenschaltung ausgebildet. Im dargestellten Ausführungsbeispiel der Erfindung wird die Belastung im Drehstrom-Zuleitungssystem 7 in kumulierter Form über die Lastströme bestimmt. Die Ladeinfrastrukturanordnung sieht Messmittel 9 vor zum Bestimmen der kumulierten Lastströme in den Phasenleitern L1, L2, L3 vor. Die Messmittel 9 sind so zwischen den AC-Ladeeinrichtungen 1, 2, 3, 4 einerseits und der DC-Ladeeinrichtung 5 andererseits angeordnet, dass die kumulierten Lastströme in den Phasenleitern L1, L2, L3 als Summe der von den AC-Ladeeinrichtungen 1, 2, 3, 4 bereitgestellten lokalen Ladeströme i13, i22, i33, i42 getrennt für die Phasenleiter L1, L2, L3 bestimmt werden können. Die DC-Ladeeinrichtung 5 nimmt die Messwerte für die kumulierten Lastströme der Phasenleiter L1, L2, L3 entgegen. Im Zusammenwirken mit der Steuerung ist die Leistungselektronik 22 der DC-Ladeeinrichtung 5 eingerichtet zum Einprägen von Ausgleichsströme i51, i52, i53 zwischen den Phasenleitern L1, L2, L3 und dem Nullleiter N des Drehstrom-Zuleitungssystems 7.

In einem in der Fig. 1 dargestellten Betriebsfall sei angenommen, dass ein erster Ladestrom als ein erster lokaler Laststrom i13 an einer ersten AC-Ladeeinrichtung 1 der Ladeinfrastrukturanordnung bereitgestellt wird. Die erste AC-Ladeeinrichtung 1 sei dabei mit einem dritten Phasenleiter L3 des Drehstrom-Zuleitungssystems 7 gekoppelt mit der Folge, dass der erste lokale Ladestrom i13 den dritten Phasenleiter L3 belastet. An einer zweiten AC-Ladeeinrichtung 2 der Ladeinfrastrukturanordnung wird ein zweiter Ladestrom als ein zweiter lokaler Laststrom i22 bereitgestellt, der aufgrund der Verkabelung der zweiten AC-Ladeeinrichtung 2 einen zweiten Phasenleiter L2 des Drehstrom-Zuleitungssystems 7 belastet. In analoger Weise sind eine dritte AC-Ladeeinrichtung 3 und eine vierte AC-Ladeeinrichtung 4 so mit dem Drehstrom-Zuleitungssystem 7 verbunden, dass ein dritter Ladestrom als ein dritter lokaler Laststrom i33 ebenfalls den dritten Phasenleiter L3 und ein vierter Ladestrom als ein vierter lokaler Laststrom i42 den zweiten Phasenleiter L2 des Drehstrom-Zuleitungssystems 7 belasten.

Die jeweilige Belastung der AC-Ladeeinrichtungen 1, 2, 3, 4 für sich genommen beziehungsweise der Ladestrom i13, i22, i33, i42 jeder AC-Ladeeinrichtung 1, 2, 3, 4 ist in Fig. 1 in dem rechtwinkligen Koordinatensystem unter der jeweiligen AC-Ladeeinrichtung 1, 2, 3, 4 nach Phasen getrennt dargestellt. Eine kumulierte Belastung des Drehstrom-Zuleitungssystems 7 zwischen zwei benachbarten AC-Ladeeinrichtungen 1, 2, 3, 4 beziehungsweise zwischen der vierten AC-Ladeeinrichtung 4 und der DC-Ladeeinrichtung 5 ist jeweils oberhalb des ersten Phasenleiters L1 des Drehstrom-Zuleitungssystems 7 dargestellt. Erkennbar ist hierbei auch, dass die Messmittel 9 die kumulierte Belastung durch alle vier AC-Ladeeinrichtungen 1, 2, 3, 4 ermitteln und der DC-Ladeeinrichtung 5 zur Verfügung stellen.

Nimmt man zur Erklärung der Funktion des Schieflastausgleichs einmal an, dass über eine erste AC-Ladeeinrichtung 1 und eine dritte AC-Ladeeinrichtung 3 jeweils ein Ladestrom i13, i33 von 16 A und über eine zweite AC- Ladeeinrichtung 2 und eine vierte AC- Ladeeinrichtung 3 jeweils ein Ladestrom i22, i42 von 20 A bereitgestellt wird, dass für den Anschlusspunkt 6 eine maximale Schieflast von 20 A zulässig ist und dass die maximale Stromtragfähigkeit im Anschlusspunkt 6 bei 64 A liegt, wird man erkennen, dass allein bei einer Bereitstellung der lokalen Ladeströme i13, i22 an den ersten beiden AC-Ladeeinrichtungen 1, 2 die maximale Schieflast nicht überschritten ist. Ebenso ist der Grenzwert für die maximale Stromtragfähigkeit eingehalten. Durch die Bereitstellung des dritten lokalen Ladestroms i33 an der dritten AC-Ladeeinrichtung 3 wird nun der dritte Phasenleiter L3 mit insgesamt 32 A belastet. Hier kommt es jetzt zu einer Überschreitung des Grenzwerts für die maximale Schieflast. In analoger Weise wird durch die Bereitstellung des vierten lokalen Ladestroms i42 an der vierten AC-Ladeeinrichtung 4 die maximale Schieflast überschritten. Die maximale Stromtragfähigkeit, welche in Bezug auf den Anschlusspunkt 6 spezifiziert ist, wäre im vorliegenden Beispiel nicht überschritten.

Aufgrund der Verletzung des Grenzwerts für die maximale Schieflast wäre ein Betrieb der Ladeinfrastrukturanordnung ohne einen Schieflastausgleich durch die DC-Ladeeinrichtung 5 in dem oben skizzierten Betriebsfall nicht uneingeschränkt möglich. Erst die DC-Ladeeinrichtung 5 sorgt erfindungsgemäß dafür, dass der am geringsten belasteten Phase (Phasenleiter L1) des Drehstrom-Zuleitungssystems 7 Energie entnommen und diese Energie auf die am stärksten belasteten Phasen (Phasenleiter L2, L3) verteilt wird. Die DC-Ladeeinrichtung 5 prägt hierzu Ausgleichsströme i51, i52, i53 zwischen den Phasenleitern L1, L2, L3 und dem Nullleiter N des Drehstrom-Zuleitungssystems 7 derart ein, dass in dem Anschlusspunkt 6 der Ladeinfrastrukturanordnung eine Schieflast dahingehend ausgeglichen ist, dass ein Grenzwert für eine maximale Schieflast und/oder ein Grenzwert für eine maximale Stromtragfähigkeit im Anschlusspunkt 6 nicht überschritten sind. Im Idealfall ist die Schieflast im Anschlusspunkt 6 auf Null ausgeglichen.

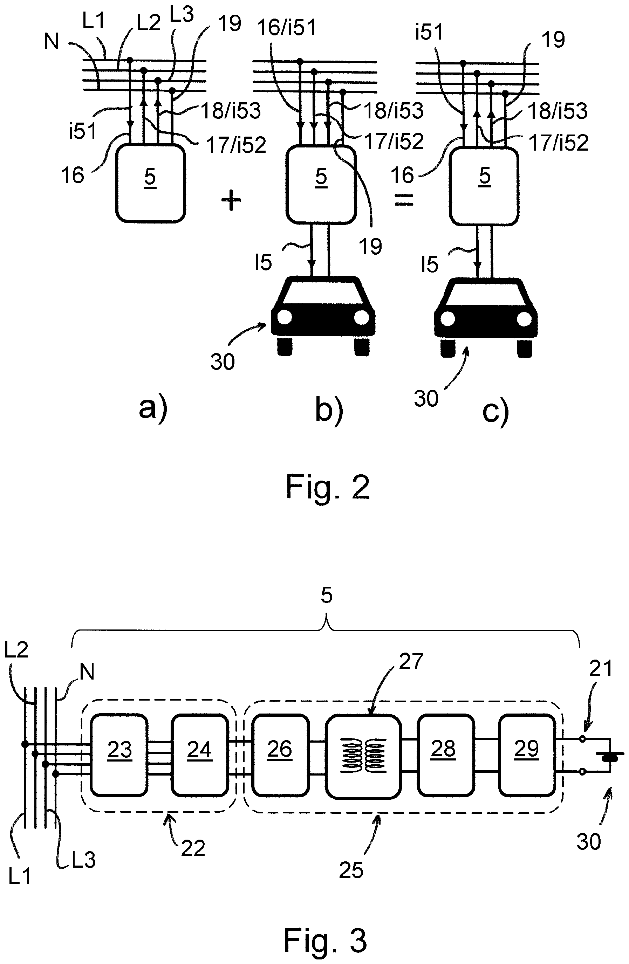

Der oben diskutierte Betriebsfall der Ladeinfrastrukturanordnung nach Fig. 1 geht zunächst davon aus, dass die DC-Ladeeinrichtung 5 allein für den Schieflastausgleich im Drehstrom-Zuleitungssystem genutzt wird. In Fig. 2 ist dargestellt, dass die DC-Ladeeinrichtung 5 auch dazu dient, einen DC-Ladestrom l5 bereitzustellen, um ein Fahrzeug 30 zu laden. In Fig. 2 a) sind dabei der Schieflastausgleich und in Fig. 2 b) das Laden des Fahrzeugs 30 dargestellt. Dieses kann wahlweise einzeln, das heißt zeitlich getrennt, oder wie in Fig. 2 c) dargestellt gleichzeitig stattfinden. Die DC-Ladeeinrichtung 5 wird dann zugleich dazu verwendet, das Fahrzeug 30 mit dem Ladestrom l5 zu laden und die Schieflast im Drehstrom-Zuleitungssystem auszugleichen. Die Ausgleichsströme i51, i52, i53 erhöhen sich dann um einen Anteil, der auf den parallel laufenden Ladevorgang zurückgeht.

Fig. 3 zeigt den prinzipiellen Aufbau der DC-Ladeeinrichtung 5 mit einem Ladepunkt 21. Die DC-Ladeeinrichtung 5 umfasst die Leistungselektronik 22, den galvanisch getrennten DC/DC-Wandler 25, eine nicht dargestellte Steuerung, den Ladepunkt 21, an dem das durch seine Batterie dargestellte Fahrzeug 30 angeschlossen ist, sowie die zum Anschluss an das Drehstrom-Zuleitungssystem 7 dienenden Anschlussleiter 16, 17, 18, 19. Die Leistungselektronik 22 umfasst den AC/DC-Wandler 24 mit der Brückenschaltung und einen EMV-Filter 23. Der galvanisch getrennte DC/DC-Wandler 25 sieht eine DC/AC-H-Brücke 26, einen Trafo 27, einen AC/DC-Gleichrichter 28 und einen EMV-Filter 29 vor. Die Steuerung wirkt mit der Leistungselektronik 22 zusammen. Sie dient der Durchführung des Ladevorgangs und des Schieflastausgleichs.

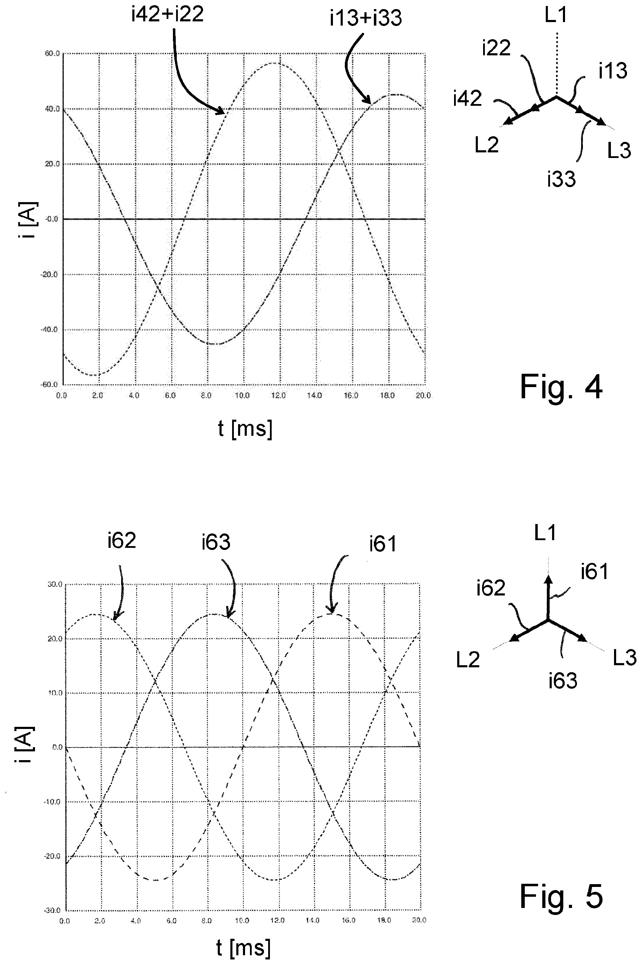

In dem Graph nach Fig. 4 sind die kumulierten Lastströme der drei Phasenleiter L1, L2, L3 im Drehstrom-Zuleitungssystem 7 für einen Punkt zwischen dem vierten AC-Ladepunkt 4 und der DC-Ladeeinrichtung 5 dargestellt. Die kumulierten Lastströme entsprechen insofern denen, die mithilfe der Messmittel 9 bestimmt und der DC-Ladeeinrichtung 5 zugeführt werden. Während der erste Phasenleiter L1 im vorliegenden Ausführungsbeispiel unbelastet ist, ergibt sich die kumulierte Belastung des zweiten Phasenleiters L2 durch die Summe der lokalen Ladeströme i42, i22, die an der zweiten AC-Ladeeinrichtung 2 und der vierten AC-Ladeeinrichtung 4 bereitgestellt werden. In analoger Weise ergibt sich die kumulierte Belastung des dritten Phasenleiters L3 durch die Summe der lokalen Ladeströme i13, i33 der ersten AC-Ladeeinrichtung 1 und der dritten AC-Ladeeinrichtung 3.

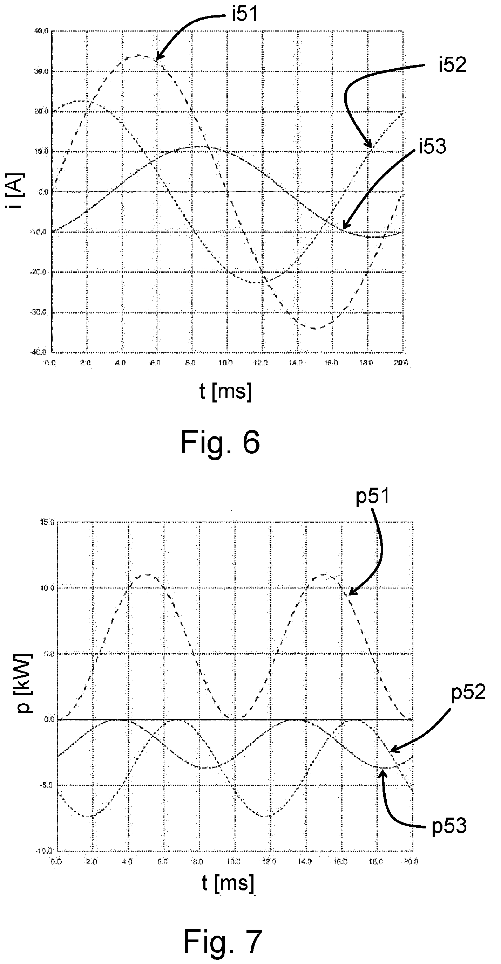

In Fig. 5 ist die kumulierte Belastung der Phasenleiter L1, L2, L3 im Anschlusspunkt 6 der Ladeinfrastrukturanordnung dargestellt. Hierbei ist zu erkennen, dass die Lastströme i61, i62, i63 in den Phasenleitern L1, L2, L3 gleich groß und phasenverschoben sind. Zur Realisierung dieser gleichmäßigen Belastung im Drehstrom-Zuleitungssystem 7 prägt die DC-Ladeeinrichtung 5 die in dem Graph nach Fig. 6 dargestellten Ausgleichsströme i51, i52, i53 ein. Praktisch bedeutet dies, dass der am wenigsten belasteten Phase (Phasenleiter L1) Energie entnommen und diese Energie auf die am höchsten belasteten Phasen (Phasenleiter L2, L3) verteilt wird. Die mittels der Leistungselektronik 22 der DC-Ladeeinrichtung 5 eingespeisten beziehungsweise verschobenen Leistungen p51, p52, p53 sind in dem Graph nach Fig. 7 für die verschiedenen Phasenleiter L1, L2, L3 beziehungsweise die ihnen zugeordneten Anschlussleiter 16, 17, 18 dargestellt.

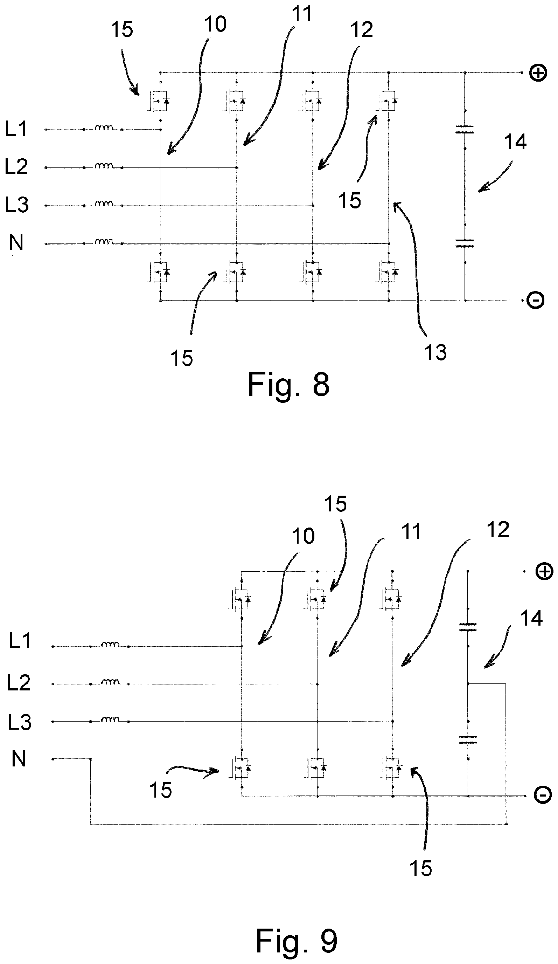

Drei alternative Ausführungsformen der Brückenschaltung (AC/DC-Wandler 24) der Leistungselektronik 22 sind in den Fig. 8 bis 10 wiedergegeben.

Nach einer ersten Ausführungsform gemäß Fig. 8 sieht die Brückenschaltung je einen Brückenzweig 10, 11, 12 für die den Phasenleitern L1, L2, L3 zugeordneten Anschlussleiter 16, 17, 18 und einen weiteren Brückenzweig 13 für den dem Nullleiter N zugeordneten Anschlussleiter 19 der DC-Ladeeinrichtung 5 vor. Des Weiteren ist ein Zwischenkreis 14 mit einer Zwischenkreiskapazität umfasst. Die Anschlussleiter 16, 17, 18, 19 sind jeweils über eine Induktivität beziehungsweise eine Spule an die Phasenleiter L1, L2, L3 und den Nullleiter N des Drehstrom-Zuleitungssystems 7 angeschlossen.

Nach einer zweiten Ausführungsform umfasst die Brückenschaltung für die den Phasenleitern L1, L2, L3 zugeordneten Anschlussleiter 16, 17, 18 die Brückenzweige 10, 11, 12, vgl. Fig. 9. Die den Phasenleitern L1, L2, L3 zugeordneten Anschlussleiter 16, 17, 18 sind jeweils über eine Induktivität beziehungsweise eine Spule an die Phasenleiter L1, L2, L3 des Drehstrom-Zuleitungssystems 7 angeschlossen. Darüber hinaus ist der dem Nullleiter N zugeordnete Anschlussleiter 19 an einen Mittelpunkt der Zwischenkreiskapazität des Zwischenkreises 14 zwischen zwei in Reihe geschalteten Kondensatoren beziehungsweise Kapazitäten von bevorzugt gleicher Größe angeschlossen.

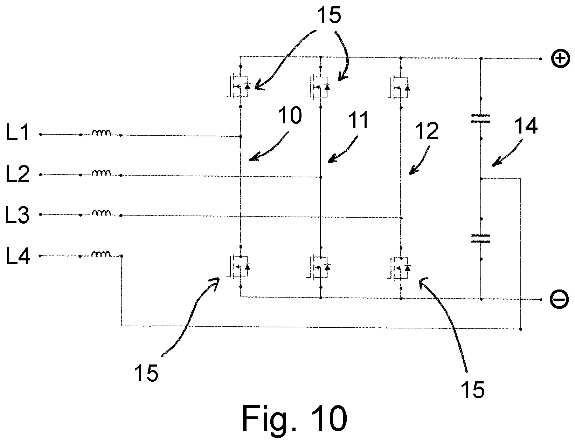

Eine dritte alternative Ausführungsform der Brückenschaltung nach Fig. 10 entspricht im Wesentlichen der Ausführungsform nach Fig. 9. Allerdings ist hier auch der dem Nullleiter N zugeordneten Anschlussleiter 19 über eine Induktivität beziehungsweise eine Spule an den Nullleiter N des Drehstrom-Zuleitungssystems 7 angeschlossen.

Eine besonders kompakte und kostengünstige Realisierung der Brückenschaltung ergibt sich, wenn die den Phasenleitern L1, L2, L3 und dem Nullleiter N zugeordneten Induktivitäten magnetisch gekoppelt werden, indem die Induktivität bildende Spulen auf einen gemeinsamen Kern gewickelt werden.

Jeweils sind den Brückenzweigen 10, 11, 12, 13 Schaltmittel 15 zum getakteten Betrieb der Anschlussleiter 16, 17, 18, 19 und zum Gleichrichten des Wechselstroms zugeordnet. Als Schaltmittel 15 finden Leistungshalbleiter, beispielsweise MOSFETs, IGBTs, Thyristoren, IGCTs oder GTOs Verwendung. Die Schaltmittel 15 werden über die Steuerung der DC-Ladeeinrichtung 5 betätigt beziehungsweise angesteuert.

Die erfindungsgemäße Ladeinfrastrukturanordnung kann im Sinne einer Versorgungsinfrastrukturanordnung dazu ausgebildet sein, über das Bereitstellen von Ladeströmen für Elektrofahrzeuge hinaus an die Ladeinfrastrukturanordnung angeschlossene Elektrofahrzeuge im Rahmen eines übergeordneten Energiemanagements als Energiequelle zu nutzen und in den Fahrzeugen beziehungsweise ihren Energiespeichern gespeicherte Energie bedarfsgerecht in das Versorgungsnetz einzuspeisen. Dies kann beispielsweise sinnvoll sein, um temporär Lastspitzen auszugleichen.

Das Vorsehen der AC-Ladeeinrichtungen 1, 2, 3, 4 als Wechselstromlasteinheiten 1, 2, 3, 4 ist exemplarisch gewählt. Beispielsweise können Produktionsmittel und/oder Fertigungsmaschinen als weitere Wechselstromlasteinheiten vorgesehen sein. Ebenso kann die Ladeinfrastrukturanordnung auf AC-Ladeeinrichtungen verzichten und allein die DC-Ladeeinrichtung 5 mit der integrierten Schieflastausgleichsfunktion vorsehen. Ebenso exemplarisch ist in dem vorliegenden Ausführungsbeispiel der Erfindung die Belastung des Drehstrom-Zuleitungssystems 7 kumuliert über die gemessenen Lastströme jedes Phasenleiters L1, L2, L3 bestimmt, die durch die Summe der Lastbeziehungsweise Ladeströme i13, i22, i33, i42 der Wechselstromlasteinheiten (AC-Ladeeinheiten 1, 2, 3, 4) definiert ist. Alternativ könnte die Belastung über die kumulierte Leistung oder lokal über die Last- beziehungsweise Ladeströme i13, i22, i33, i42 oder die lokale Scheinleistung der einzelnen Wechselstromlasteinheiten (AC-Ladeeinheiten 1, 2, 3, 4) ermittelt werden.

Gleiche Bauteile und Bauteilfunktionen sind durch gleiche Bezugszeichen gekennzeichnet.

## Patentansprüche

1. Ladeinfrastrukturanordnung zum Laden von Elektrofahrzeugen umfassend
- einen Anschlusspunkt (6), der eingerichtet ist zum Anschluss der Ladeinfrastrukturanordnung an ein externes Versorgungsnetz (8),
- ein zu dem Anschlusspunkt (6) geführtes Drehstrom-Zuleitungssystem (7) mit drei Phasenleitern (L1, L2, L3) und einem Nullleiter (N),
- wenigstens eine Wechselstromlasteinheit (1, 2, 3, 4), die an wenigstens einen Phasenleiter (L1, L2, L3) und den Nullleiter (N) des Drehstrom-Zuleitungssystems (7) angeschlossen ist,
- eine DC-Ladeeinrichtung (5) mit einem AC/DC-Wandler (24), der über Anschlussleiter (16, 17, 18, 19) an die Phasenleiter (L1, L2, L3) und den Nullleiter (N) des Drehstrom-Zuleitungssystems (7) angeschlossen ist,
wobei für den Anschlusspunkt (6) eine maximale Stromtragfähigkeit und/oder eine maximale Schieflast vorgegeben sind und wobei die DC-Ladeeinrichtung (5) eingerichtet ist zum Entgegennehmen einer Information über eine kumulierte Belastung jedes Phasenleiters (L1, L2, L3) des Drehstrom-Zuleitungssystems (7) durch die Wechselstromlasteinheiten (1, 2, 3, 4) und/oder eine lokale Belastung des Drehstrom-Zuleitungssystems (7) durch jede einzelne Wechselstromlasteinheit (1, 2, 3, 4), zum Bereitstellen eines Ladestroms (l5) an einem Ladepunkt der DC-Ladeeinrichtung (5) für ein an die Ladepunkt (21) angeschlossenes Elektrofahrzeug (30) und zum Einprägen eines Ausgleichsstroms (i51, i52, i53) zwischen den Phasenleitern (L1, L2, L3) und dem Nullleiter (N) des Drehstrom-Zuleitungssystems (7) derart, dass in dem Anschlusspunkt (6) die maximale Schieflast und/oder die maximale Stromtragfähigkeit nicht überschritten sind.

2. Ladeinfrastrukturanordnung nach Anspruch 1, **dadurch gekennzeichnet, dass** die DC-Ladeeinrichtung (5) eine Steuerung und eine Leistungselektronik (22) mit dem AC/DC-Wandler (24) vorsieht, wobei der AC/DC-Wandler (24) als eine Brückenschaltung realisiert ist und wobei die Brückenschaltung einen Brückenzweig (10, 11, 12) je Anschlussleiter (16, 17, 18), der einem Phasenleiter (L1, L2, L3) des Drehstrom-Zuleitungssystems (7) zugeordnet ist, und einen Zwischenkreis (14) mit einer Zwischenkreiskapazität vorsieht.

3. Ladeinfrastrukturanordnung nach Anspruch 1 oder 2, **dadurch gekennzeichnet, dass** ein dem Nullleiter (N) zugeordneter Anschlussleiter (19) der DC-Ladeeinrichtung (5) an einen Mittelpunkt der Zwischenkreiskapazität angeschlossen ist.

4. Ladeinfrastrukturanordnung nach Anspruch 1 oder 2, **dadurch gekennzeichnet, dass** die Brückenschaltung einen weiteren Brückenzweig (13) für einen dem Nullleiter (N) des Drehstrom-Zuleitungssystems (7) zugeordneten Anschlussleiter (19) vorsieht und/oder dass die Anschlussleiter (16, 17, 18, 19) jeweils über eine Induktivität an das Drehstrom-Zuleitungssystem (7) angeschlossen sind und/oder dass die den Anschlussleitern (16, 17, 18, 19) zugeordneten Induktivitäten magnetisch gekoppelt sind, indem die Induktivitäten bildende Spulen auf einen gemeinsamen Kern gewickelt sind.

5. Ladeinfrastrukturanordnung nach einem der Ansprüche 1 bis 4, **dadurch gekennzeichnet, dass** die DC-Ladeeinrichtung (5) einen galvanisch getrennten DC/DC-Wandler (25) umfasst, wobei der DC/DC-Wandler (25) zwischen dem AC/DC-Wandler (24) und dem Ladepunkt (21) der DC-Ladeeinrichtung (5) angeordnet ist.

6. Ladeinfrastrukturanordnung nach einem der Ansprüche 1 bis 5, **dadurch gekennzeichnet, dass** eine Mehrzahl von Wechselstromlasteinheiten (1, 2, 3, 4) an dem Drehstrom-Zuleitungssystem (7) angeschlossen ist.

7. Ladeinfrastrukturanordnung nach einem der Ansprüche 1 bis 6, **dadurch gekennzeichnet, dass** wenigstens eine Wechselstromlasteinheit (1, 2, 3, 4) durch eine AC-Ladeeinrichtung gebildet ist.

8. Ladeinfrastrukturanordnung nach einem der Ansprüche 1 bis 7, **dadurch gekennzeichnet, dass** Messmittel (9) vorgesehen sind zum Bestimmen der kumulierten Belastung der Phasenleitern (L1, L2, L3) des Drehstrom-Zuleitungssystems (7) und/oder dass die Messmittel (9) zwischen der wenigstens einen Wechselstromlasteinheit (1, 2, 3, 4) einerseits und der DC-Ladeeinrichtung (5) andererseits vorgesehen sind.

9. Ladeinfrastrukturanordnung nach einem der Ansprüche 1 bis 8, **dadurch gekennzeichnet, dass** von der Wechselstromlasteinheit (1, 2, 3, 4) eine Information zu der lokalen Belastung durch die Wechselstromlasteinheit (1, 2, 3, 4) an die DC-Ladeeinrichtung (5) übertragbar sind.

10. Ladeinfrastrukturanordnung nach einem der Ansprüche 1 bis 9, **dadurch gekennzeichnet, dass** die Information über die lokalen Belastungen der einzelnen Wechselstromlasteinheiten (1, 2, 3, 4) und/oder die kumulierte Belastung im Drehstrom-Zuleitungssystem (7) kabellos und/oder leitungsgebunden an die DC-Ladeeinrichtung (5) bereitgestellt sind.

11. Betriebsverfahren für eine Ladeinfrastrukturanordnung zum Laden von Elektrofahrzeugen, insbesondere für eine Ladeinfrastrukturanordnung nach einem der Ansprüche 1 bis 10, wobei die Ladeinfrastrukturanordnung einen Anschlusspunkt (6), ein zu dem Anschlusspunkt (6) geführtes Drehstrom-Zuleitungssystem (7) mit drei Phasenleitern (L1, L2, L3) und einem Nullleiter (N), wenigstens eine an das Drehstrom-Zuleitungssystem (7) angeschlossene Wechselstromlasteinheit (1, 2, 3, 4) und eine DC-Ladeeinrichtung (5) vorsieht, wobei die DC-Ladeeinrichtung (5) eine Leistungselektronik (22) mit einem AC/DC-Wandler (24) vorsieht, umfassend die folgenden Schritte:
- die DC-Ladeeinrichtung (5) nimmt eine Information über eine kumulierte Belastung jedes Phasenleiter (L1, L2, L3) des Drehstrom-Zuleitungssystems (7) durch die Wechselstromlasteinheiten (1, 2, 3, 4) und/oder eine lokale Belastung des Drehstrom-Zuleitungssystems (7) durch jede Wechselstromlasteinheit (1, 2, 3, 4) entgegen,
- die DC-Ladeeinrichtung (5) bestimmt eine aus der kumulierten Belastung jedes Phasenleiter (L1, L2, L3) des Drehstrom-Zuleitungssystems (7) und/oder aus der lokalen Belastung des Drehstrom-Zuleitungssystems (7) durch jede Wechselstromlasteinheit (1, 2, 3, 4) resultierende Schieflast,
- die DC-Ladeeinrichtung (5) prägt einen Ausgleichsstrom (i51, i52, i53) ein, der so bemessen ist, dass eine tatsächliche Schieflast im Anschlusspunkt (6) kleiner ist als eine für den Anschlusspunkt (6) definierte maximale Schieflast und/oder dass eine maximale Stromtragfähigkeit im Anschlusspunkt (6) nicht überschritten ist.

12. Betriebsverfahren nach Anspruch 11, **dadurch gekennzeichnet, dass** die DC-Ladeeinrichtung (5) die Schieflast im Anschlusspunkt (6) ausgleicht und zugleich einen Ladestrom (l5) an einem Ladepunkt (21) der DC-Ladeeinrichtung (5) bereitstellt.

13. Betriebsverfahren nach Anspruch 11 oder 12, **dadurch gekennzeichnet, dass** die tatsächliche Schieflast im Anschlusspunkt (6) im Wesentlichen Null ist.

14. Betriebsverfahren nach einem der Ansprüche 11 bis 13, **dadurch gekennzeichnet, dass** die kumulierte Belastung getrennt für jeden Phasenleiter (L1, L2, L3) gemessen und dann an die DC-Ladeeinrichtung (5) übertragen wird.

15. Betriebsverfahren nach einem der Ansprüche 11 bis 14, **dadurch gekennzeichnet, dass** eine Information über die lokale Belastung des Drehstrom-Zuleitungssystems (7) durch jede Wechselstromlasteinheit (1, 2, 3, 4) und/oder eine Information über den von jeder Wechselstromlasteinheit (1, 2, 3, 4) belasteten Phasenleiter (L1, L2, L3) von der Wechselstromlasteinheit (1, 2, 3, 4) an die DC-Ladeeinrichtung (5) übertragen wird.
